(19) Europäisches Patentamt

European Patent Office

Office européen des brevets

(11) **EP 0 967 466 A1**

(12) **EUROPÄISCHE PATENTANMELDUNG**

(43) Veröffentlichungstag:
29.12.1999 Patentblatt 1999/52

(51) Int. Cl.⁶: **G01F 1/32**, G01F 1/66,
G01N 21/45

(21) Anmeldenummer: 99111635.1

(22) Anmeldetag: 16.06.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.06.1998 EP 98111663
17.09.1998 US 100725 P

(71) Anmelder:
Endress + Hauser Flowtec AG
CH-4153 Reinach BL 1 (CH)

(72) Erfinder:
• Maul, Joachim, Dr. Ing.
79576 Weil am Rhein (DE)
• Ohle, Frank, Dr. rer. nat.
79585 Steinen (DE)

(74) Vertreter:
Morstadt, Volker, Dipl.-Ing.
Endress + Hauser
Zentrale Patentabteilung
Postfach 2222
79574 Weil am Rhein (DE)

(54) **Optischer Wirbelströmungsaufnehmer**

(57)    Dieser ist für höhere Temperaturen als 400 °C geeignet und hat ein Sensorsystem, das das Fluid nicht berührt. Er mißt die Strömungsgeschwindigkeit und/oder den Volumendurchfluß eines Fluids. Er hat ein Meßrohr (1) mit einer Wand (11), in die zwei einander diametral gegenüberliegende Fenster (2, 3) aus einem optischen, schlierenfreien hochtemperaturbeständigen Glas fluid- und druckdicht eingesetzt sind. Entlang eines vor dem ersten liegenden zweiten Durchmessers ist ein Staukörper (4) senkrecht dazu angeordnet und im Meßrohr fixiert, der Kármán'sche Wirbel (5) im Fluid erzeugt. Ein Laser-Differential-Interferometer (6) hat ein Sendeteil (61), das außerhalb des Meßrohrs vor dem Fenster (2) angeordnet und an diesem und/oder dem Meßrohr fixiert ist, mit folgenden Komponenten: Ein Laser (21), ein Linsensystem (22), ein erstes Polarisationsfilter (23), ein erstes Wollastonprisma (24) und eine erste Linse (25). Ein Empfangsteil (62) ist außerhalb des Meßrohrs vor dem Fenster (3) angeordnet und an diesem und/oder dem Meßrohr fixiert ist und hat folgende Komponenten: eine zweite Linse (26), ein zweites Wollastonprisma (27), ein zweites Polarisationsfilter (28) und eine PIN-Diode (29). Wenn der Laser bereits polarisiertes Licht emittiert, entfallen die Polarisationsfilter (23, 28).

Fig.1

**Beschreibung**

Die Erfindung betrifft Wirbelströmungsaufnehmer, mit denen die Strömungsgeschwindigkeit und/oder der Volumendurchfluß eines Fluids gemessen werden kann, das in einem Meßrohr fließt.

Heute übliche Wirbelströmungsaufnehmer weisen einen über einem Durchmesser des Meßrohrs angeordneten und in dessen Wand fixierten Staukörper auf.

Bei Betrieb eines derartigen Wirbelströmungsaufnehmers entsteht bekanntlich stromabwärts des Staukörpers eine Kármán'sche Wirbelstraße, deren Druckschwankungen von einem Wirbelsensor in ein elektrisches Signal umgeformt werden, dessen Frequenz proportional zur Strömungsgeschwindigkeit des Fluids ist, woraus sich der Volumendurchfluß berechnen läßt.

Als Wirbelsensoren wurden bisher einerseits Sensoren verwendet, die in das Fluid eintauchen und auf die die Druckschwankungen direkt einwirken; solche Sensoren sind z.B., insb. kapazitive, Drucksensoren, die im Staukörper angeordnet sind oder die stromabwärts vom Staukörper in die und durch die Wand des Meßrohrs hindurch eingesetzt sind.

Andererseits wurden die Druckschwankungen auch schon mittels einer Ultraschallanordnung gemessen, deren Sender und Empfänger jeweils außerhalb des Meßrohrs und diametral einander gegenüberliegend angeordnet sind. Der Sender schickt Ultraschallsignale durch die Wand des Meßrohrs, das Fluid und die gegenüberliegende Wand hindurch, die von den Druckschwankungen moduliert und vom Empfänger registriert werden.

Jede dieser beiden Arten von Sensoren hat inhärente Nachteile, die verhindern, daß mit solchen Sensoren ausgerüstete Wirbelströmungsaufnehmer bei jedwedem Fluid angewendet werden können. Ultraschallsensoren können nur bis Fluid-Temperaturen von ca. 250 °C und kapazitive Drucksensoren nur bis Fluid-Temperaturen von ca. 400 °C eingesetzt werden.

Ferner sind auch schon Wirbelströmungsaufnehmer beschrieben worden, bei denen durch das Fluid ein Licht- oder ein Laserstrahl geschickt wird und dessen Helligkeitsmodulation durch die Wirbel zur Ermittlung von deren Frequenz dient, vgl. z.B. die US-A 45 19 259 oder die GB-A 20 84 720. Diese optischen Wirbelströmungsaufnehmer halten auch höheren Temperaturen als 400 °C stand.

Es ist eine Aufgabe der Erfindung, ein auch für höhere Temperaturen als 400 °C geeignetes optisches Sensorsystem anzugeben, das das Fluid nicht berührt und dessen Raumbedarf kleiner gemacht werden kann, als er bei den bisherigen optischen Sensorsystemen erforderlich ist.

Zur Lösung dieser Aufgabe besteht eine erste Variante der Erfindung in einem Wirbelströmungsaufnehmer zur Messung der Strömungsgeschwindigkeit und/oder des Volumendurchflusses eines Fluids, welcher Wirbelströmungsaufnehmer umfaßt:

- ein Meßrohr mit einer Wand,

   -- durch das das Fluid in einer Strömungsrichtung fließt und
   -- in dessen Wand ein erstes und ein zweites Fenster aus einem optischen, schlierenfreien hochtemperaturbeständigen Glas an entlang eines ersten Durchmessers des Meßrohrs einander gegenüberliegenden Stellen fluid- und druckdicht eingesetzt sind,

- einen entlang eines zweiten Durchmessers des Meßrohrs angeordneten und im Meßrohr fixierten Staukörper, der der Erzeugung sich von ihm ablösender Kármán'scher Wirbel im Fluid dient, deren Ablösefrequenz proportional zur Strömungsgeschwindigkeit ist,

   -- welcher zweite Durchmesser in Strömungsrichtung vor dem ersten Durchmesser liegt und zu diesem im wesentlichen senkrecht verläuft,

- ein Laser-Differential-Interferometer

   -- mit einem Sendeteil, das außerhalb des Meßrohrs vor dem ersten Fenster angeordnet und an diesem und/oder dem Meßrohr fixiert ist und das folgende optische Komponenten, die in Richtung auf das erste Fenster aufeinanderfolgen, umfaßt:

      --- einen Laser,
      --- ein Linsensystem,
      --- ein erstes Polarisationsfilter,
      --- ein erstes Wollastonprisma und
      --- eine erste Linse, und

   -- mit einem Empfangsteil, das außerhalb des Meßrohrs vor dem zweiten Fenster angeordnet und an diesem und/oder dem Meßrohr fixiert ist und das folgende optische Komponenten umfaßt, die in Richtung vom zweiten Fenster weg aufeinanderfolgen:

      --- einen zweite Linse,
      --- ein zweites Wollastonprisma,
      --- ein zweites Polarisationsfilter und
      --- eine PIN-Diode.

Zur Lösung der erwähnten Aufgabe besteht eine zweite Variante der Erfindung in einem Wirbelströmungsaufnehmer zur Messung der Strömungsgeschwindigkeit und/oder des Volumendurchflusses eines Fluids, welcher Wirbelströmungsaufnehmer umfaßt:

- ein Meßrohr mit einer Wand,

    -- durch das das Fluid in einer Strömungsrichtung fließt und
    -- in dessen Wand ein erstes und ein zweites Fenster aus einem optischen, schlierenfreien hochtemperaturbeständigen Glas an entlang eines ersten Durchmessers des Meßrohrs einander gegenüberliegenden Stellen fluid- und druckdicht eingesetzt sind,

- einen entlang eines zweiten Durchmessers des Meßrohrs angeordneten und im Meßrohr fixierten Staukörper, der der Erzeugung sich von ihm ablösender Kármán'scher Wirbel im Fluid dient, deren Ablösefrequenz proportional zur Strömungsgeschwindigkeit ist,

    -- welcher zweite Durchmesser in Strömungsrichtung vor dem ersten Durchmesser liegt und zu diesem im wesentlichen senkrecht verläuft,

- ein Laser-Differential-Interferometer

    -- mit einem Sendeteil, das außerhalb des Meßrohrs vor dem ersten Fenster angeordnet und an diesem und/oder dem Meßrohr fixiert ist und das folgende optische Komponenten, die in Richtung auf das erste Fenster aufeinanderfolgen, umfaßt:

        --- einen polarisiertes Licht aussendenden Laser,
        --- ein Linsensystem,
        --- ein erstes Wollastonprisma und
        --- eine erste Linse, und

    -- mit einem Empfangsteil, das außerhalb des Meßrohrs vor dem zweiten Fenster angeordnet ist und das folgende optische Komponenten umfaßt, die in Richtung vom zweiten Fenster weg aufeinanderfolgen:

        --- eine zweite Linse,
        --- ein zweites Wollastonprisma,
        --- ein Polarisationsfilter und
        --- eine PIN-Diode.

Nach einer bevorzugten Ausgestaltung der ersten und/oder der zweiten Variante der Erfindung sind die erste bzw. die zweite Linse als erster bzw. zweiter Achromat realisiert.

Ein Vorteil der Erfindung besteht darin, daß auch Fluide, die z.B. eine Temperatur von 600 °C haben, nach dem Wirbelprinzip meßbar sind.

Ein weiterer Vorteil ergibt sich daraus, daß die optischen Komponenten in Mikrosystemtechnik hergestellt werden können und somit der Raumbedarf für das optische Sensorsytem kleiner gemacht werden kann, als er bei den bisherigen Sensorsystemen erforderlich ist.

Die Erfindung wird nun anhand der Figuren der Zeichnung näher erläutert, in denen Ausführungsbeispiele schematisch dargestellt sind.

Fig. 1      zeigt im Längsschnitt ein Meßrohr mit dem Wirbelströmungsaufnehmer,

Fig. 2      zeigt einzelne Komponenten eines Laser-Differential-Interferometers mit zugehörigem Strahlengang entsprechend der ersten Variante der Erfindung.

Fig. 3      zeigt einzelne Komponenten eines Laser-Differential-Interferometers mit zugehörigem Strahlengang entsprechend der zweiten Variante der Erfindung.

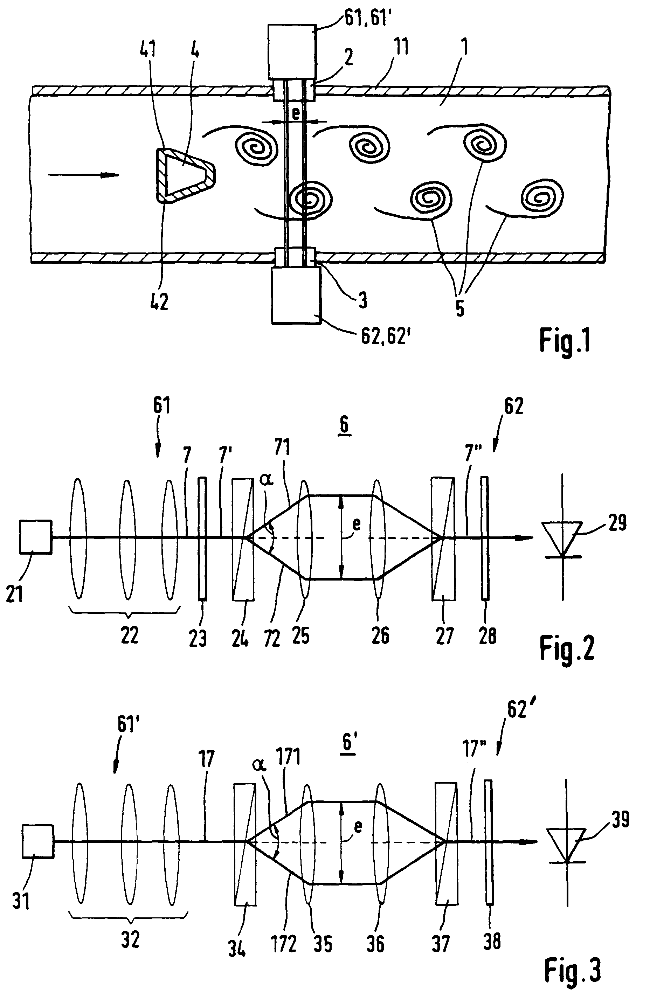

In Fig. 1 ist schematisch im Längsschnitt ein Meßrohr 1 dargestellt, durch das in der durch den Pfeil angedeuteten Strömungsrichtung ein Fluid strömt, dessen Volumendurchfluß und/oder dessen Strömungsgeschwindigkeit gemessen werden soll/sollen. Das Fluid kann eine Flüssigkeit, ein Gas oder ein Dampf sein.

Das Meßrohr 1 hat eine Wand 11, in der ein erstes und ein zweites Fenster 2, 3 fluid- und druckdicht eingesetzt sind. Die beiden Fenster 2, 3 bestehen aus einem optischen, schlieren- und blasenfreien, hochtemperatur-beständigen Glas und sind entlang eines ersten Durchmessers des Meßrohrs 1 an einander gegenüberliegenden Stellen in die Wand 11 so eingelassen, daß ihre Innenflächen mit der des Meßrohrs möglichst fluchten.

Entlang eines zweiten Durchmessers ist im Meßrohr 1 ein Staukörper 4 fixiert. Der zweite Durchmesser liegt in Strömungsrichtung vor dein ersten Durchmesser und verläuft zu diesem im wesentlichen senkrecht. Der Staukörper 4 dient der Erzeugung Kármán'scher Wirbel 5 im Fluid, die sich von ihm ablösen, und zwar abwechselnd von einer, in Strömungsrichtung gesehen, linken bzw. rechten Abreißkante 41, 42. Die Ablösefrequenz f ist bekanntlich proportional zur Strömungsgeschwindigkeit u und dem Querschnitt A der lichten Weite des Meßrohrs 1; aus diesen Größen läßt sich der Volumendurchfluß Q berechnen:

$$Q = uA; \quad u = kf; \quad Q = kAf,$$

Hierin ist k eine Konstante, die durch Kalibrieren des Wirbeldurchflußmessers ermittelt wird, wie dies ja immer erfolgt.

Ein Laser-Differential-Interferometer 6 (Fig. 2) bzw. 6' (Fig. 3) ist mit einem Sendeteil 61 bzw. 61' und mit einem Empfangsteil 62 bzw. 62' außerhalb des Meßrohrs 1 angeordnet, und zwar das Sendeteil vor dem Fenster 2 und das Empfangsteil vor dem Fenster 3.

Sendeteil und Empfangsteil sind fest am Fenster 2 bzw. 3 und/oder am Meßrohr 1 fixiert. Dadurch sind Relativbewegungen zwischen Meßrohr und Sendeteil bzw. Empfangsteil vermieden, die zu Störsignalen führen würden.

Die Fig. 2 zeigt schematisch einzelne Komponenten des Laser-Differential-Interferometers 6 mit zugehörigem Strahlengang entsprechend der ersten Variante der Erfindung. In Richtung auf das Fenster 2 sind folgende optische Komponenten des Sendeteils 61 aufeinanderfolgend angeordnet: Ein Laser 21, ein erstes Linsensystem 22, ein erstes Polarisationsfilter 23, eine erstes Wollastonprisma 24 und eine erste Linse 25, die bevorzugt ein Achromat ist.

Das Linsensystem 22 fokussiert das vom Laser ausgesendete Licht in Form eines Strahles 7 zunächst auf das Polarisationsfilter 23, das nur Strahlanteile mit einer einzigen Schwingungsebene in Form eines polarisierten Strahles 7' durchläßt. Dieser trifft auf das Wollastonprisma 24, das ihn in zwei senkrecht zueinander polarisierte Teilstrahlen 71, 72 teilt, die miteinander einen Winkel $\alpha$ bilden. Mittels der Linse 25 wird ein paralleler Strahlendurchgang durch das Fluid erreicht; die beiden Teilstrahlen haben dabei einen Abstand e.

Nach dem Durchqueren des Fluids gelangen die beiden Teilstrahlen 71, 72 zum Empfangsteil 62. In Richtung vom Fenster 3 weg sind folgende optische Komponenten des Empfangsteils 62 aufeinanderfolgend angeordnet: Eine zweite Linse 26, die bevorzugt ein Achromat ist, ein zweites Wollastonprisma 27, ein zweites Polarisationsfilter 28 und eine PIN-Diode 29.

Nach dem Durchlaufen des Fluids werden die beiden Teilstrahlen 71, 72 mittels der Linse 26 und des Wollastonprismas 27 wieder zu einem einzigen Strahl 7" vereinigt und mittels des Polarisationsfilters 28 zur Interferenz gebracht, wodurch bekanntlich Phasendifferenzen entstehen. Diese werden von der PIN-Diode 29 in elektrische Signale umgesetzt, deren Frequenz gleich der der Wirbelablösungen ist und mittels einer entsprechenden Frequenz-Auswerte-Elektronik leicht ermittelt werden kann. Da solche Elektroniken bekannt und handelsüblich sind, werden sie hier nicht näher erläutert.

Die Fig. 3 zeigt schematisch einzelne Komponenten des Laser-Differential-Interferometers 6' mit zugehörigem Strahlengang entsprechend der zweiten Variante der Erfindung. In Richtung auf das Fenster 2 sind folgende optische Komponenten des Sendeteils 61' aufeinanderfolgend angeordnet: ein polarisiertes Licht aussendender Laser 31, ein Linsensystem 32, ein erstes Wollastonprisma 34 und eine erste Linse 35, die bevorzugt ein Achromat sein kann. Im Vergleich zu Fig. 2 ist ein dem Polarisationsfilter 23 entsprechendes Polarisationsfilter wegen des ja schon polarisiertes Licht aussendenden Lasers 31 nicht erforderlich und daher nicht vorhanden. Das Linsensystem 32 fokussiert somit das vom Laser 31 ausgesendete Licht in Form eines bereits polarisierten Strahles 17 direkt auf das Wollastonprisma 34, das ihn in zwei senkrecht zueinander polarisierte Teilstrahlen 171, 172 teilt, die miteinander wieder einen Winkel $\alpha$ bilden und hinter der Linse 35 wieder einen Abstand e haben.

Nach dem Durchqueren des Fluids gelangen die beiden Teilstrahlen 171, 172 zum Empfangsteil 62'. In Richtung vom Fenster 3 weg sind folgende optische Komponenten des Empfangsteils 62' aufeinanderfolgend angeordnet: eine zweite Linse 36, ein zweites Wollastonprisma 37, ein Polarisationsfilter 38 und eine PIN-Diode 39.

Nach dem Durchlaufen des Fluids werden die beiden Teilstrahlen 171, 172 mittels der Linse 36 und des Wollastonprismas 37 wieder zu einem einzigen Strahl 17" vereinigt und im Polarisationsfilter 38 zur Interferenz gebracht. Die so entstehenden Phasendifferenzen werden von der PIN-Diode 39 wieder in elektrische Signale umgesetzt, deren Frequenz gleich der der Wirbelablösungen ist und mittels einer entsprechenden Frequenz-Auswerte-Elektronik leicht ermittelt werden kann.

Bei der Erfindung werden periodische, entlang des Weges des Laserlichts auftretende Änderungen der Dichte d des Fluids optisch ausgewertet, die durch die vom Staukörper 4 sich ablösenden Wirbel 5 entstehen. Die bei der Erfindung erzielbare Meßgrenze ist durch die Auflösung g des Laser-Differential-Interferometers vorgegeben:

$$g = \delta d/e,$$

worin mit $\delta d$ der momentane Dichtegradient entlang des optischen Weges des Laserlichts der beiden Teilstrahlen 71, 72 bzw. 171, 172 bezeichnet ist.

Für die Dichte d gilt aufgrund der Lorentz-Lorenz-Gleichung: $d = (n^2 - 1)/R(n^2 + 2)$, worin n der Brechungsindex und R das spezifische, von der Lichtwellenlänge 1 abhängige Brechungsvermögen des Fluids ist. Für z.B. Luft und einen Wert 1 = 632 nm der Wellenlänge hat das Brechungsvermögen einen Wert R = 0,0000152 $m^3$/kg. Da das Brechungsvermögen R in einem weiten Druck- und Temperaturbereich nur um etwa 3% schwankt, kann es als konstant vorausgesetzt werden.

Ferner kann die obige Lorentz-Lorenz-Gleichung vereinfacht werden, da nur die erwähnten Dichtegradienten $\delta d$ auftreten und die dadurch erzeugten Schwankungen $\delta n$ des Brechungsindexes klein sind:

$$\delta d/\delta n = 6n/R(n^2 + 2)^2.$$

Ferner gilt für $\delta n$: $\delta n = l/D$, worin D der Durchmesser des Meßrohrs 1 ist.

Für 1 = 632 nm, e = 2 mm und D = 53 mm ergibt sich eine Auflösung g = 0,00262 kg/($m^3$mm). Diese Auflösung ist schon ausreichend für Strömungsgeschwindigkeiten von Gasen als Fluid oberhalb von 2 m/s.

**Patentansprüche**

1. Wirbelströmungsaufnehmer zur Messung der Strömungsgeschwindigkeit und/oder des Volumendurchflusses eines Fluids, welcher Wirbelströmungsaufnehmer umfaßt:

   - ein Meßrohr (1) mit einer Wand (11),

     -- durch das das Fluid in einer Strömungsrichtung fließt und
     -- in dessen Wand ein erstes und ein zweites Fenster (2, 3) aus einem optischen, schlierenfreien hochtemperaturbeständigen Glas an entlang eines ersten Durchmessers des Meßrohrs einander gegenüberliegenden Stellen fluid- und druckdicht eingesetzt sind,

   - einen entlang eines zweiten Durchmessers des Meßrohrs angeordneten und im Meßrohr fixierten Staukörper (4), der der Erzeugung sich von ihm ablösender Kármán'scher Wirbel (5) im Fluid dient, deren Ablösefrequenz proportional zur Strömungsgeschwindigkeit ist,

     -- welcher zweite Durchmesser in Strömungsrichtung vor dem ersten Durchmesser liegt und zu diesem im wesentlichen senkrecht verläuft,

   - ein Laser-Differential-Interferometer (6)

     -- mit einem Sendeteil (61), das außerhalb des Meßrohrs vor dem ersten Fenster (2) angeordnet und an diesem und/oder dem Meßrohr fixiert ist und das folgende optische Komponenten, die in Richtung auf das erste Fenster aufeinanderfolgen, umfaßt:

       --- einen Laser (21),
       --- ein Linsensystem (22),
       --- ein erstes Polarisationsfilter (23),
       --- ein erstes Wollastonprisma (24) und
       --- eine erste Linse (25), und

     -- mit einem Empfangsteil (62), das außerhalb des Meßrohrs vor dem zweiten Fenster (3) angeordnet und an diesem und/oder dem Meßrohr fixiert ist und das folgende optische Komponenten, die in Richtung vom zweiten Fenster weg aufeinanderfolgen umfaßt:

       --- eine zweite Linse (26),
       --- ein zweites Wollastonprisma (27),

       --- ein zweites Polarisationsfilter (28) und

       --- eine PIN-Diode (29).

2. Wirbelströmungsaufnehmer zur Messung der Strömungsgeschwindigkeit und/oder des Volumendurchflusses eines Fluids, welcher Wirbelströmungsaufnehmer umfaßt:

   - ein Meßrohr (1) mit einer Wand (11),

     -- durch das das Fluid in einer Strömungsrichtung fließt und
     -- in dessen Wand ein erstes und ein zweites Fenster (2, 3) aus einem optischen, schlierenfreien hochtemperaturbeständigen Glas an entlang eines ersten Durchmessers des Meßrohrs einander gegenüberliegenden Stellen fluid- und druckdicht eingesetzt sind,

   - einen entlang eines zweiten Durchmessers des Meßrohrs angeordneten und im Meßrohr fixierten Staukörper (4), der der Erzeugung sich von ihm ablösender Kármán'scher Wirbel (5) im Fluid dient, deren Ablösefrequenz proportional zur Strömungsgeschwindigkeit ist,

     -- welcher zweite Durchmesser in Strömungsrichtung vor dem ersten Durchmesser liegt und zu diesem im wesentlichen senkrecht verläuft,

   - ein Laser-Differential-Interferometer (6)

     -- mit einem Sendeteil (61'), das außerhalb des Meßrohrs vor dem ersten Fenster (2) angeordnet und an diesem und/oder dem Meßrohr fixiert ist und das folgende optische Komponenten, die in Richtung auf das erste Fenster aufeinanderfolgen, umfaßt:

       --- einen polarisiertes Licht aussendenden Laser (21),
       --- ein Linsensystem (32),
       --- ein erstes Wollastonprisma (34) und
       --- eine erste Linse (35), und

     -- mit einem Empfangsteil (62'), das außerhalb des Meßrohrs vor dem zweiten Fenster (3) angeordnet und an diesem und/oder dem Meßrohr fixiert ist und das folgende optische Komponenten, die in Richtung vom zweiten Fenster weg aufeinanderfolgen, umfaßt:

--- eine zweite Linse (36),
--- ein zweites Wollastonprisma (37),
--- ein Polarisationsfilter (38) und
--- eine PIN-Diode (39).

3. Wirbelströmungsaufnehmer nach Anspruch 1 oder 2 mit einem ersten bzw. einem zweiten Achromaten als erster bzw. zweiter Linse (25, 26; 35, 36).

Fig.1

Fig.2

Fig.3

**Europäisches Patentamt**

**EUROPÄISCHER RECHERCHENBERICHT**

Nummer der Anmeldung

EP 99 11 1635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | US 4 519 259 A (PITT GILLIES D  ET AL) 28. Mai 1985 (1985-05-28) * Spalte 2, Zeile 36 - Zeile 47; Abbildungen 1A,1B * --- | 1-3 | G01F1/32 G01F1/66 G01N21/45 |
| Y | US 5 604 591 A (KITAGAWA JUNICHI) 18. Februar 1997 (1997-02-18) * Zusammenfassung; Abbildung 1 * --- | 1-3 | |
| A | GB 2 084 720 A (STANDARD TELEPHONES CABLES LTD) 15. April 1982 (1982-04-15) * Seite 1, Zeile 86 - Zeile 94; Abbildung 1 * --- | 1-3 | |
| A | US 2 813 424 A (LIEPMAN H.W. ET AL) 19. November 1957 (1957-11-19) * Spalte 2, Zeile 63 - Spalte 3, Zeile 4; Abbildung 5 * --- | 1-3 | |
| A | ALTHAUS W:  "EXPERIMENTAL INVESTIGATION OF VORTEX FORMATION IN THE WAKE OF A FLAT PLATE FOR SUBSONIC AND SUPERSONIC FREESTREAM MACH NUMBERS" EXPERIMENTS IN FLUIDS, Bd. 9, Nr. 5, 1. Juli 1990 (1990-07-01), Seiten 267-272, XP000218048 * Seite 268, Spalte 2, Zeile 14 - Zeile 21; Abbildungen 2-4 * ----- | 1-3 | RECHERCHIERTE SACHGEBIETE (Int.Cl.6) G01F G01N |

Der vorliegende Recherchenbericht wurde für alle Patentansprüche erstellt

| Recherchenort | Abschlußdatum der Recherche | Prüfer |
|---|---|---|
| DEN HAAG | 24. September 1999 | Boerrigter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 11 1635

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-09-1999

| Im Recherchenbericht angeführtes Patentdokument | Datum der Veröffentlichung | Mitglied(er) der Patentfamilie | Datum der Veröffentlichung |
|---|---|---|---|
| US 4519259 A | 28-05-1985 | GB 2116701 A<br>CA 1198296 A | 28-09-1983<br>24-12-1985 |
| US 5604591 A | 18-02-1997 | JP 7280657 A<br>JP 8094444 A | 27-10-1995<br>12-04-1996 |
| GB 2084720 A | 15-04-1982 | CA 1168894 A | 12-06-1984 |
| US 2813424 A | 19-11-1957 | KEINE | |

EPO FORM P0461

Für nähere Einzelheiten zu diesem Anhang : siehe Amtsblatt des Europäischen Patentamts, Nr.12/82